# EUROPEAN PATENT APPLICATION

(11) **EP 0 890 998 A1**
(43) Date of publication of application: **13.01.1999**
(21) Application number: 97830339.4
(22) Date of filing: 07.07.1997
(51) Int. Cl.: H01L 41/00, G01L 9/00

(54) **Manufacturing method and integrated piezoresistive pressure sensor having a diaphragm of polycristalline semiconductor material**

(71) Applicant: STMicroelectronics S.r.l., 20041 Agrate Brianza (Milano) (IT)
(72) Inventor: Ferrari, Paolo, 21013 Gallarate (IT); Vigna, Benedetto, 85100 Potenza (IT); Villa, Flavio, 20159 Milano (IT)
(74) Representative: Cerbaro, Elena

(57) **Abstract**

The pressure sensor comprises a semiconductor material single crystal substrate (21); a semiconductor material layer (28) on the substrate (21); an air gap (55) arranged between the substrate (21) and the semiconductor material layer (28); and at least an opening (53) extending between the lower outer surface (52) of the substrate (21) and the air gap (55). The semiconductor material layer (28) is formed by a polycrystalline region (29) forming a diaphragm over the air gap (55) and by a monocrystalline region (30) elsewhere. Piezoresistive elements (46) extend over the semiconductor material layer (28), insulated therefrom by a dielectric layer (45), at a lateral delimitation edge of the diaphragm (29) and are connected one another so as to form a Wheatstone bridge the unbalancing whereof allows the pressure exerted onto the sensor to be measured.

## Description

The present invention relates to a manufacturing method and an integrated piezoresistive pressure sensor having a diaphragm of polycrystalline semiconductor material.

AS is known, in recent years, micromachining techniques have been developed for producing integrated pressure microsensors of semiconductor material. These sensors present numerous advantages as compared with traditional sensors: lower cost; high degree of performance and reliability; better signal-to-noise ratio; possibility of integration with memory circuits for producing intelligent sensors; possibility of on-line self-testing; and greater reproducibility. As such, integrated pressure microsensors are now being used increasingly in the automotive industry, and contribute for greater safety and environmental protection with absolutely no increase in vehicle cost.

Currently marketed semiconductor pressure microsensors are substantially based onto three physical effects: a piezoresistive effect whereby the pressure-induced inflection of a silicon diaphragm unbalances a Wheatstone bridge comprising resistors diffused in the diaphragm; a capacitive effect whereby pressure induces a displacement of a diaphragm forming the movable electrode of a capacitor (thus resulting in a variation in capacitance); and a resonant effect whereby the pressure inflects a diaphragm to which a resonant structure is fixed and this mechanical deformation varies the own oscillation frequency of the structure.

The present invention relates to a sensor implementing the first effect, i.e. to a piezoresistive sensor.

At present, diaphragms of semiconductor material (silicon) are produced using the bulk micromachining technique, which is described in detail, for example, in the articles "CMOS Integrated Silicon Pressure Sensor" by T. Ishihara, K. Suzuki, S. Suwazono, M. Hirata and H. Tanigawa, IEEE Journal Sol. St. Circuits, vol. sc-22, Apr. 1987, 151-156, and "Micromachining and ASIC Technology" by A.M. Stoffel, Microelectronics Journal 25 (1994) 145-156.

For the sensor to operate effectively, the diaphragms must be of uniform, accurately controlled thickness with no intrinsic mechanical stress. These characteristics are achieved by forming the microstructures by plasma or wet etching, isotropically (for profiles coincident with the crystal faces) or anisotropically (for generating profiles which are independent from the crystal orientation). At present, the etching method for producing the diaphragm, which provides for more accurately controlling the thickness of the diaphragm and eliminating any process-induced tensile or compressive stress, is the electrochemical stop method using a PN junction. Accordingly, the diaphragm is formed in a N-type monocrystalline semiconductor layer (e.g. the epitaxial layer) on a P-type substrate; the N-type layer is masked except for a previously implanted anode contact region; the rear of the substrate is masked with a mask presenting a window aligned with the region in which the diaphragm is to be formed; a positive potential difference is applied between the N-type layer, via the anode contact region, and the substrate; and the P-type substrate is chemically etched for a few hours at low temperature (e.g. 90°C). Etching terminates automatically at the PN junction, and the N-type layer at the removed substrate region forms the diaphragm.

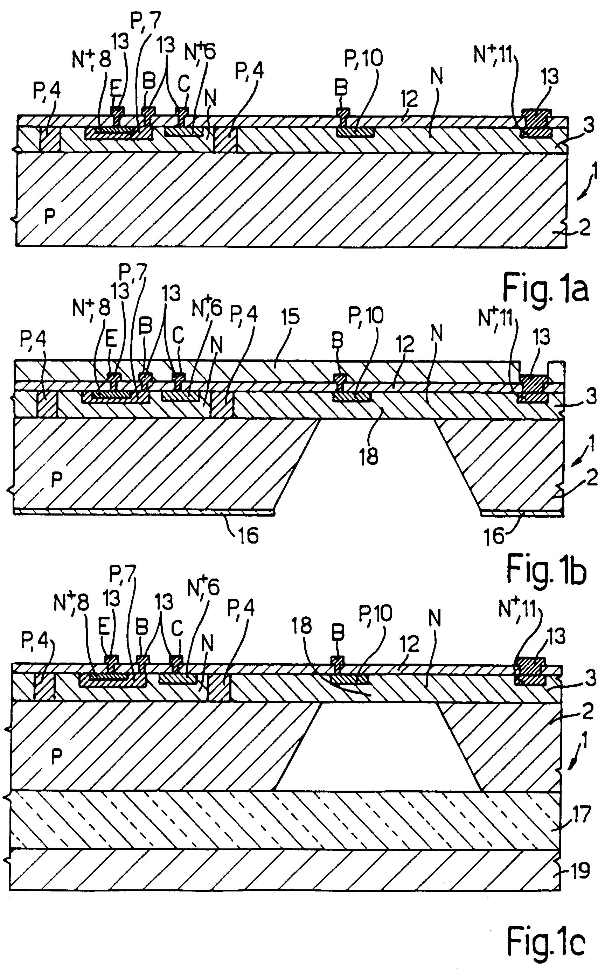

An example of the fabrication steps of a absolute piezoresistive pressure microsensor using the electrochemical stop method is described below with reference to figs. 1a, 1b and 1c.

The initial steps are those commonly adopted in the fabrication of integrated circuits. In particular, starting from a wafer 1 of monocrystalline silicon comprising a P-type substrate 2 and an N-type epitaxial layer 3, P-type junction isolation regions 4 extending from the upper surface of wafer 1 to substrate 2 are formed in epitaxial layer 3; the integrated circuit is then formed (whereof fig. 1a shows an NPN transistor with an N+-type collector contact region 6, a P-type base region 7, and a N+-type emitter region 8); simultaneously with the integrated circuit, the diffused resistors (only one of which, comprising a P-type resistive layer 10, is shown) and one anode region for each wafer and each diaphragm (N+-type region 11 in fig. 1a) are formed. The resistors are preferably formed in the same implant step of base region 7 of the NPN transistor, and anode region 11 is formed in the same step as one of the N-type regions of the integrated circuit (e.g. when implanting collector contact region 6 or emitter region 8). A dielectric layer 12 is then deposited, and metal contacts 13 are formed.

Thereafter, wafer 1 is masked with a front mask 15 and a rear mask 16. The front mask 15 (of silicon oxide) covers the whole of the upper surface of wafer 1 except for a window at anode region 11, and the rear mask 16 (of silicon nitride or oxide) covers the whole of the lower surface of the wafer except for the region in which the diaphragm is to be formed, as shown in fig. 1b. The rear of the wafer is then subjected to anisotropic etching while epitaxial layer 3 is biased, via anode region 11, at a positive voltage (e.g. 5V) with respect to substrate 2. Anisotropic etching terminates automatically at epitaxial layer 3; and the portion of epitaxial layer 3 at the removed portion of substrate 2 forms the diaphragm 18.

Following removal of masks 15 and 16, wafer 1 is bonded to a sheet of glass 17 (fig. 1c) using the anodic bonding method whereby a medium-high voltage (e.g. 500 V) is applied between wafer 1 and sheet 17 for a few hours at a temperature of 300 to 400°C or using the glass frit bonding method requiring lower temperatures. Finally, sheet 17 is fixed to container 19.

The above method presents the following drawbacks: it is incompatible with batch processing techniques, due to the electric contacts on each wafer; rear etching of wafer 1 poses problems in terms of front-rear alignment; the thickness of wafer 1 demands prolonged etching; the scaling problems involved are such as to preclude the integration of structures smaller than a few hundred micrometers; and, once the diaphragm is formed, wafer 1 must invariably be bonded to a glass support, both for absolute and differential sensors (which require holes aligned with the diaphragm, thus posing further alignment problems).

Furthermore, the anisotropy of etching causes a reduction of the otherwise available area of wafer 1; the used chemical agents (comprising K or Na) contaminate the chip, causing problems in the circuit integration; it is very difficult to control the thickness of the active diaphragm and this gives rise to problems in sensor reproducibility.

The above drawbacks make it difficult to integrate the method in currently used integrated circuit technology. Therefore, several pressure microsensor manufacturers have opted to form a double integrated chip: one chip contains the diaphragm microstructure, while the other provides for processing the signal. Single-chip integrated sensors also exist, but are not batch processed.

Several industrial laboratories and research centers have produced prototype integrated microstructures using the surface micromachining technique. Details of these are to be found, for example, in the articles: "Novel fully CMOS-compatible vacuum sensor", by O. Paul, H. Baltes, in Sensors and Actuators A 46-47 (1995) p. 143-146, in which a diaphragm of dielectric material is formed on a sacrificial metal layer; "Surface-Micromachined Piezoresistive Pressure Sensor" by T. Lisec, H. Stauch, B. Wagner, in Sensor 95 Kongressband, AO1.2, p. 21-25, in which both the sacrificial layer and the diaphragm are of polysilicon and separated by a small layer of silicon oxide; and "Surface-Micromachined Microdiaphragm Pressure Sensors" by S. Sugiyama, K. Shimaoka, O. Tabata, in Sensors and Materials 4, 5 (1993), p. 265-275, in which use is made of a sacrificial polysilicon layer and a silicon nitride layer as the diaphragm.

Though they do in fact provide for better integrating the devices, the above surface micromachining techniques pose serious problems as regards quality of the deposited films (amorphous or polycrystalline) to form the diaphragms, stiction of the suspended structures on the silicon substrate, and packaging difficulties.

It is an object of the present invention to provide a pressure sensor and fabrication method thereof, overcoming the aforementioned drawbacks.

According to the present invention, there are provided a manufacturing method and an integrated piezoresistive pressure sensor having a diaphragm of polycrystalline material, as claimed respectively in Claims 1 and 12.

A preferred, non-limiting embodiment of the present invention will be described by way of example with reference to the accompanying drawings, in which:
Figs. 1a, 1b and 1c show cross sections of a wafer of semiconductor material at successive steps in the fabrication of a known sensor;
Figs. 2a, 2b 2c, 2d, 2e, 2f and 2g show cross sections of a wafer of semiconductor material at successive steps in the fabrication of a first embodiment of the present sensor;
Fig. 3 shows a top plan view of a detail of the sensor according to fig. 2g;
Fig. 4 shows a cross section of a different embodiment of the present sensor;
Fig. 5 shows a section, as in figs. 2a-2g, of a different embodiment of the fabrication method; and
Figs. 6a, 6b and 6c show sections, as in figs. 2a-2g, of a further embodiment of the present invention.

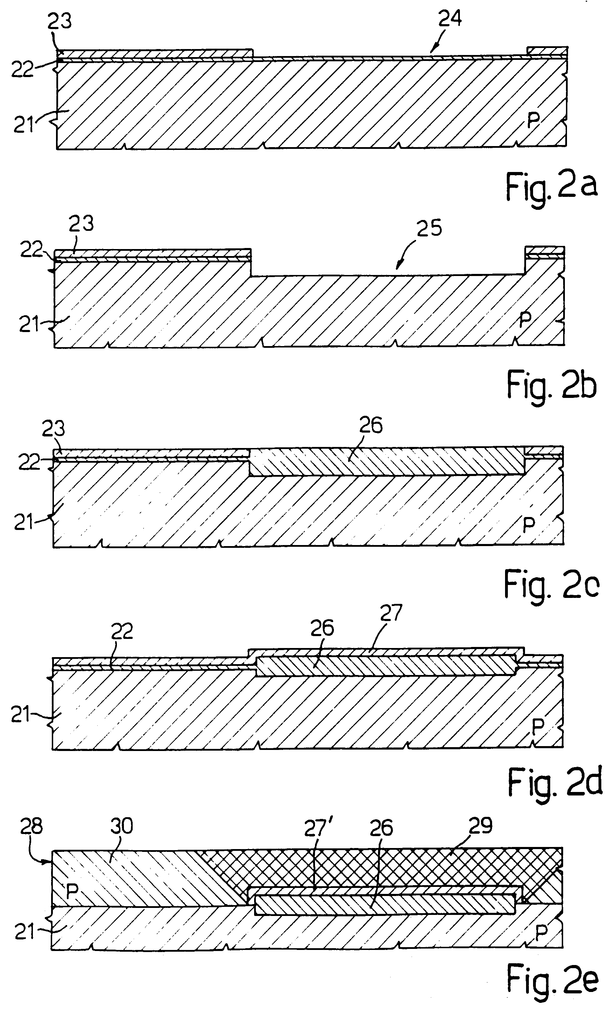

With reference to fig. 2a, according to a first embodiment of the present fabrication method, on a substrate 21 of P-type forming a single crystal silicon wafer, a silicon oxide layer 22 is formed, e.g. grown thermally; a silicon nitride layer 23 is deposited on oxide layer 22; a phototechnical and etching step are performed on the portion of the nitride in which the pressure sensor is to be formed. After removing the resist masking layer the intermediate structure in fig. 2a is obtained in which nitride layer 23 has a window 24.

Thereafter, silicon oxide layer 22 and substrate 21, masked by nitride layer 23, are etched successively to obtain the intermediate structure shown in fig. 2b in which oxide layer 22 and part of substrate 21 form a recess 25, which is subsequently filled with a sacrificial oxide region 26 which is thermally grown, with a thickness of about 2 µm (fig. 2c).

Then, silicon nitride layer 23 is removed; an amorphous or polycrystalline silicon layer 27 is deposited, as shown in fig. 2d. By means of a phototechnical and etching step, polysilicon layer 27, with the exception of the portion over sacrificial oxide region 26, and oxide layer 22 over substrate 21 are removed. Thus, over sacrificial oxide region 26, a silicon region 27' is obtained representing the germ for a next step of growing the epitaxial layer. If called for in the process, doping species are implanted to form buried structures; then, an epitaxial grown is carried out for forming a so called pseudo-epitaxial layer 28 which has a polycrystalline structure (polysilicon region 29) over sacrificial oxide region 26, and a monocrystalline structure (epitaxial region 30) elsewhere. Thus a wafer 32 is obtained, as shown in fig. 2e, wherein the thickness of the pseudo-epitaxial layer 28 is preferably comprised between 5 and 10 µm.

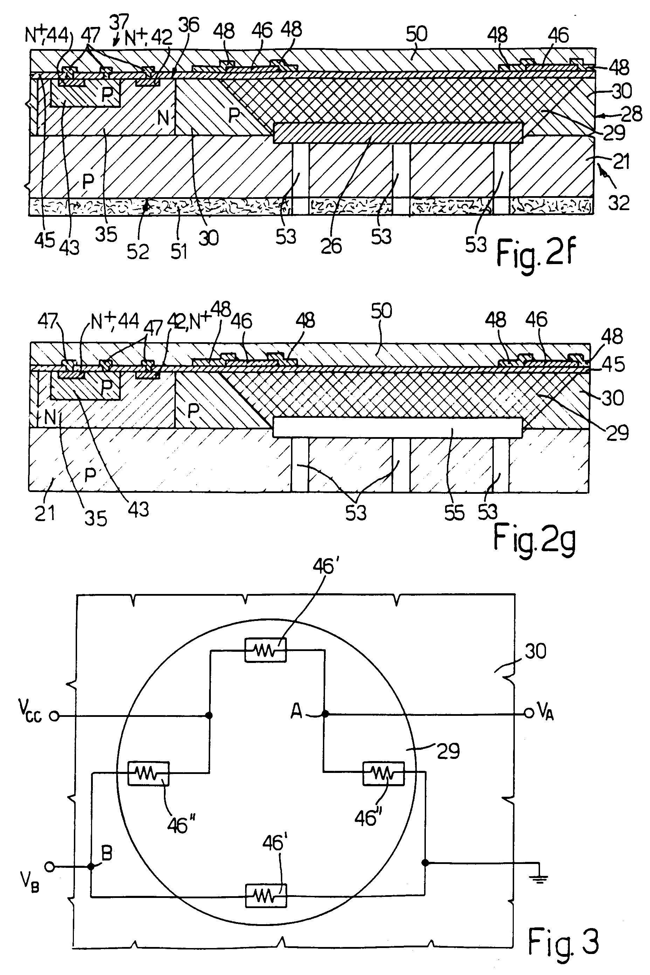

Then, standard integrated circuit fabrication steps are carried out. More specifically, as shown in fig. 2f, N-type well regions 35, extending from surface 36 of epitaxial layer 28 to substrate 21, and an NPN transistor 37, having an N+-type collector contact region 42, a P-type base region 43, and an N+-type emitter region 44, are formed in P-type epitaxial layer 28. Thereafter, a dielectric layer 45 is deposited and a P-type polycrystalline silicon layer (doped with boron) having a thickness of 0.2-0.4 µm is deposited; the polysilicon layer is then shaped to form piezoresistive resistors 46. Advantageously, in order to increase the sensor sensitivity, piezoresistors 46 are formed near the edges of the polycrystalline region 29 intended to form the diaphragm, i.e. in the maximum sensitivity region, as shown in fig. 3. In particular, two resistors 46' are oriented such as, when the diaphragm is pressure stressed, they increase their resistance, while the other two resistors 46'' decrease their resistance.

Then, metal contacts 47, 48 and interconnection lines are formed to connect the piezoresistors to define a Wheatstone bridge (fig. 3). As a consequence, when a pressure is exerted, voltage V_{A} at node A decreases, while voltage V_{B} at node B increases. Thus, bridge unbalancing allows the exerted pressure to be measured.

Thereafter, one or more dielectric and passivation layers are deposited (shown in fig. 2f as a single layer 50) and sacrificial oxide region 26 is removed. To this end, the rear surface 52 of the wafer is completely covered by mask 51 with the exception of windows at the sacrificial oxide region 26 and substrate 21 is anisotropically RIE etched, to form openings 53 having practically vertical sidewalls (fig. 2f). In the alternative, instead of a RIE etching step, an etch with a TMAH (TetraMetilAmmoniumHydroxyde) solution may be carried out, which gives rise to openings with inclined sidewalls having an angle of about 54°, and thus a substantially frusto-conical shape; by which it is possible to precisely control the diaphragm thickness by virtue of the high etching selectivity with respect to oxide.

Thereafter, sacrificial oxide region 26 is etched and completely removed through openings 43 using hydrofluoric acid thus forming an air gap 55 extending beneath inner polycrystalline region 29 (fig. 2g). Polycrystalline region 29 thus forms the pressure sensor diaphragm. The final structure, after removing mask 51, is shown in fig. 2g and forms a sensor for detecting the absolute and/or differential pressure.

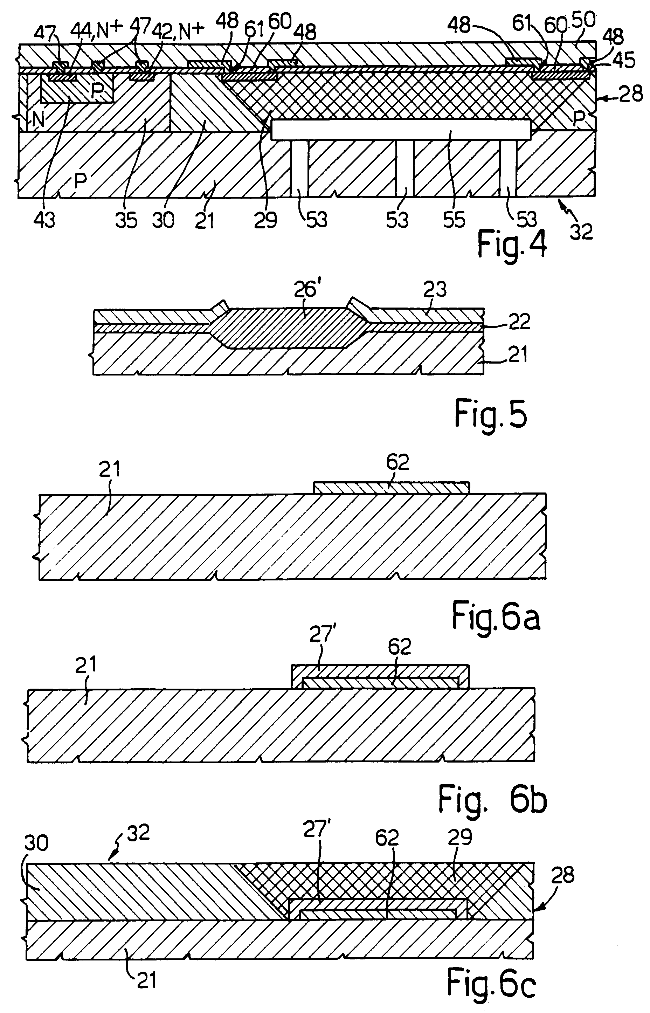

According to a different embodiment of the just described process, instead of being formed by a polysilicon layer deposited above surface 36 of wafer 32, the piezoresistors are integrated in the diaphragm 29, as shown in fig. 4, wherein piezoresistors 60 are formed using the usual steps of masking and implanting a suitable doping agent of N-type, in case simultaneously with other components of the signal processing circuit. Electrical contacts 48 having portions extending through openings 61 of the dielectric layer 45 allow the piezoresistors 60 to be connected according to the diagram of fig. 4, as above described.

The described process allows a considerable simplification of the working process with respect to known solutions ad avoids a lot of problems during packaging, by eliminating the anodic bonding step. The sensor may be integrated together with the relative circuitry, since the fabrication does not require the use of alkaline ion-based pollutant chemical agents. A spatial integration may be obtained which is comparable with that of surface micromachined structures and which is greater of one-tow magnitude orders than bulk-micromachined sensors. The polycrystalline structure of region 29 is not problematic to the finished sensor, since this region does not accommodate signal processing components but only, in case, piezoresistors 60. On the other hand, polycrystalline region 29 as grown at high temperatures, has very good mechanical features, and in particular a very low internal mechanical stress and a Young module which is comparable with that of monocrystalline silicon. Therefore, diaphragm 29 has mechanical characteristics which are much better that surface micromachined structures, with a diaphragm formed from a deposited polysilicon film. Finally, with the described technique, a precise control of the diaphragm 29 thickness is obtained ad thus a very good reproducibility.

According to a different embodiment of the invention, the buried oxide region is grown directly by local oxidation, without forming recess 25 beforehand, thus eliminating etching of oxide layer 22 and substrate 21. According to this embodiment, shown in fig. 5, after obtaining the intermediate structure in fig. 2a, this structure is oxidized locally, as masked by nitride layer 23, to form a sacrificial oxide region 26' at window 24 with typical "bird's beaks" beneath nitride layer 23. Then, nitride layer 23 is removed, silicon layer 27 is deposited as shown in fig. 2d, and the successive steps shown in figs. 2e-2g are performed.

According to a further embodiment shown in figs. 6a-6c, the buried oxide region is formed by depositing and defining an oxide layer. More specifically, a silicon oxide layer is deposited on substrate 21; by means of known photolithography techniques, oxide layer is defined to form an oxide region 62 (fig. 6a); an amorphous or polycrystalline silicon layer is deposited, then etched and removed, except for the portion over oxide region 62, forming a region 27' (fig. 6b); the epitaxial layer is then grown to obtain the structure in fig. 6c corresponding to fig. 2e, and showing polysilicon region 29 and epitaxial region 30. The steps described above with reference to figs. 2f and 2g are then performed.

Clearly, changes may be made to the sensor and method as described and illustrated herein without, however, departing from the scope of the present invention, as defined in the appended claims. In particular, the integrated electronic components may be both bipolar and MOS types; the conductivity type of the various regions may be other than as shown.

## Claims

1. A method of fabricating an integrated pressure sensor of semiconductor material, characterized by the steps of:
- forming a sacrificial buried region (26, 26', 60') of insulating material on a substrate (21) of single-crystal structure semiconductor material;
- epitaxially growing a semiconductor material layer (28) on said substrate (2); said semiconductor material layer comprising a polycrystalline region (29) over said sacrificial buried region and a monocrystalline region (30) elsewhere, said substrate and said semiconductor material layer surrounding said sacrificial buried region (26, 26', 60') on all sides;
- selectively removing portions of said substrate (21) to form openings (53) extending from a surface (52) of said substrate to said sacrificial buried region (26, 26', 60');
- removing said sacrificial buried region (26, 26', 60') via said openings (53) and forming an air gap (55) between said substrate (21) and said semiconductor material layer (28), said polycrystalline region (29) forming a semiconductor diaphragm (29); and
- forming piezoresistive elements (46; 60) carried by said semiconductor diaphragm (29).

2. A method according to claim 1, characterized in that said step of forming piezoresistive elements (46; 60) is carried out before said step of selectively removing portions of said substrate (21).

3. A method according to claim 1 or 2, characterized in that said step of forming piezoresistive elements (46; 60) comprises the steps of:
- forming a dielectric layer (45) on said semiconductor material layer (28);
- forming piezoresistive regions (46) on said dielectric layer and at a lateral delimitation edge of said polycrystalline region; and
- forming interconnection and electrical contact regions (47, 48) of electrically conductive material connecting said piezoresistive regions to form a measure bridge structure.

4. A method according to claim 3, characterized in that said piezoresistive regions (46) are formed by deposited doped polycrystalline silicon.

5. A method according to claim 1 or 2, characterized in that said step of forming piezoresistive elements (46; 60) comprises the steps of:
- forming piezoresistive regions (60) in said polycrystalline region at a lateral delimitation edge thereof;
- forming a dielectric layer (45) on said semiconductor material layer (28), said dielectric layer having openings (61) at said piezoresistive regions; and
- forming interconnection and electrical contact regions (48) of electrically conductive material having portions extending through said openings, said piezoresistive regions and said interconnection regions forming a measure bridge structure.

6. A method according to claim 5, characterized in that said semiconductor material layer (28) has a first conductivity type and in that said step of forming piezoresistive regions comprises the step of implanting doping ions having a second conductivity type.

7. A method according to any one of the preceding claims, characterized in that said step of forming a sacrificial buried region comprises the steps of:
- masking said substrate (21) with a mask (23) of nonoxidizable material having a window (24); and
- growing said sacrificial buried region (26) at said window.

8. A method according to claim 7, characterized in that after said step of masking said substrate (21), a portion of said substrate (21) is removed at said window to form a recess (25) in the substrate; and in that said step of growing comprises the step of thermal growing said sacrificial buried region (26) to substantially fill said recess (25).

9. A method according to claim 7, characterized in that said step of growing comprises the step of locally oxidizing (26') said substrate (21) at said window (24).

10. A method according to any of claims 1-6, characterized in that said step of forming a sacrificial buried region comprises the steps of:
- depositing and lithographically defining an oxide layer (62) over said substrate (21).

11. A method according to any one of the preceding claims, characterized in that said step of growing a semiconductor material layer (28) is preceded by the step of:
- forming, on said sacrificial buried region (26, 26', 62'), a germ region (27') of polycrystalline semiconductor material.

12. An integrated pressure sensor of semiconductor material, comprising a substrate (21) of monocrystalline semiconductor material, and a semiconductor material layer (28) on said substrate; characterized in that it comprises an air gap (55) interposed between said substrate (21) and said semiconductor material layer (28) and at least an opening (53) extending between an outer surface (52) of said substrate (21) and said air gap (55); and in that said semiconductor material layer (28) comprises, over said air gap (55) a polycrystalline region (29) forming a diaphragm and, elsewhere, a monocrystalline region (30), said diaphragm bearing piezoresistive elements (46; 60).

13. A sensor according to claim 12, characterized in that it comprises a dielectric layer (45) extending on said semiconductor material layer (28) and in that said piezoresistive elements (46) extend over said dielectric layer at a lateral delimitation edge of said diaphragm (29).

14. A sensor according to claim 13, characterized in that said piezoresistive elements (46) comprise polysilicon doped regions.

15. A sensor according to claim 12, characterized in that said piezoresistive elements (60) are integrated within said diaphragm (29) near a lateral delimitation edge thereof.

16. A sensor according to claim 15, characterized in that said semiconductor material layer (28) has a first conductivity type and in that said piezoresistive regions (60) have a second conductivity type.

17. A sensor according to any of claims 14-16, characterized in that said piezoresistive elements (46; 60) are connected to each other and form a measure bridge structure.
